# EUROPÄISCHE PATENTSCHRIFT

(11) **EP 3 526 072 B1**
(45) Veröffentlichungstag und Bekanntmachung des Hinweises auf die Patenterteilung: **26.04.2023**
(21) Anmeldenummer: 17728065.8
(22) Anmeldetag: 09.05.2017
(51) Int. Cl.: B60L 53/31, B60L 53/62, B60L 53/63, B60L 53/66, B60L 53/67, B60L 53/68, B60L 58/13, H02J 3/32

(54) **VERFAHREN ZUR STEUERUNG DES ELEKTRISCHEN LADENS EINER GRUPPE VON FAHRZEUGEN**
METHOD FOR CHARGE CONTROL OF A PLURALITY OF VEHICLES
MÉTHODE POUR CONTRÔLE DE CHARGE POUR UNE PLURALITÉ DE VÉHICULES

(30) Priorität: 11.10.2016 DE 102016219726
(43) Veröffentlichungstag der Anmeldung: 21.08.2019
(73) Patentinhaber: Bayerische Motoren Werke Aktiengesellschaft, 80809 München (DE)
(72) Erfinder: MARCIAL-SIMON, Enrique, 97209 Veitshöchheim (DE); MEHLHORN, Rainer, 85652 Landsham (DE); PFAB, Xaver, 85570 Herdweg (DE); STAUNER, Thomas, 85716 Unterschleissheim (DE)
(86) Internationale Anmeldenummer: PCT/EP2017/061012
(87) Internationale Veröffentlichungsnummer: WO 2018/068903

(56) Entgegenhaltungen:
- EP-A2- 2 273 648
- EP-A2- 2 721 708
- EP-B1- 2 721 708
- WO-A1-2010/120551
- WO-A1-2011/009129
- WO-A1-2012/004897
- DE-A1-102014 206 381
- US-A1- 2012 019 203
- US-A1- 2012 109 403
- US-A1- 2014 006 137
- US-A1- 2015 306 970
- US-A1- 2016 039 301
- US-A1- 2016 280 091

## Beschreibung

Die Erfindung betrifft ein Verfahren zur Steuerung des elektrischen Ladens einer Gruppe von Fahrzeugen sowie ein entsprechendes Steuersystem.

Aus dem Stand der Technik ist es bekannt, das Laden der Energiespeicher einer Gruppe bzw. eines Pools von elektrisch antreibbaren Fahrzeugen über ein Steuersystem derart zu steuern, dass auch Anforderungen des Betreibers des zum Laden verwendeten Stromnetzes im Hinblick auf eine Leistungsreduktion berücksichtigt werden. Hierbei wird von dem Steuersystem ein Leistungsreduktionsvorgang gemäß einem Reduktionsschema durchgeführt, welches eine Reduktion der Ladeleistung des Ladevorgangs der Energiespeicher von Fahrzeugen des Fahrzeugpools durch temporäres Aussetzen des Ladevorgangs spezifiziert. Ohne Initialisierung eines Leistungsreduktionsvorgangs sind für das Laden der Energiespeicher der einzelnen Kraftfahrzeuge einzuhaltende Parameter vorgegeben. Für Fahrzeuge, die an einem Leistungsreduktionsvorgang teilnehmen, kann von diesen Parametern des Ladevorgangs gegebenenfalls abgewichen werden.

In der Regel kann zumindest ein Teil der Parameter des Ladevorgangs des Energiespeichers eines Fahrzeugs durch einen zugeordneten Benutzer über eine Benutzerschnittstelle manuell verändert werden. Da es der Nutzer eines Fahrzeugs unter Umständen nicht wünscht, dass von diesen Parametern abgewichen wird, ist es aus dem Stand der Technik bekannt, dass der Nutzer die Teilnahme seines Fahrzeugs an einem Leistungsreduktionsvorgang sperren kann (sog. Opt-out). Darüber hinaus kann der Fall auftreten, dass während oder kurz vor der Durchführung eines Leistungsreduktionsvorgangs die Parameter eines an diesem Vorgang teilnehmenden Fahrzeugs durch den Nutzer verändert werden. Herkömmlicherweise hat dies zur Konsequenz, dass das betreffende Fahrzeug dann nicht mehr an dem Leistungsreduktionsvorgang teilnimmt. Dies hat jedoch den Nachteil, dass aufgrund des Wegfalls des Fahrzeugs das Reduktionsschema für den Leistungsreduktionsvorgang wieder neu berechnet werden muss, wofür Rechenressourcen in dem zentralen Steuersystem benötigt werden.

Üblicherweise werden Nutzer von Kraftfahrzeugen für die Teilnahme an entsprechenden Leistungsreduktionsvorgängen über ein Belohnungssystem belohnt. Zum Beispiel können die Nutzer hierfür monetäre Vergünstigungen erhalten. Wie bereits oben erwähnt, fällt das Fahrzeug eines Nutzers derzeit jedoch automatisch aus der Teilnahme an einem Leistungsreduktionsvorgang heraus, wenn der Nutzer manuell Parameter des Ladevorgangs bei einem bevorstehenden bzw. bereits begonnenen Leistungsreduktionsvorgang verändert. Der Nutzer hat somit keine Anreize, manuelle Veränderungen von Parametern des Ladevorgangs für sein Fahrzeug derart zu wählen, dass sein Fahrzeug weiterhin am Leistungsreduktionsvorgang teilnimmt.

Mit den oben beschriebenen Mechanismen können auch Anforderungen des Betreibers eines Stromnetzes im Hinblick auf eine Leistungserhöhung berücksichtigt werden, z.B. wenn im Stromnetz des Betreibers Überkapazitäten auftreten, welche durch das Laden von Energiespeichern eines Fahrzeugpools abgefangen werden sollen. Bis dato werden jedoch Anforderungen in Bezug auf eine Leistungserhöhung nicht bei der Steuerung des Ladens der Energiespeicher eines Fahrzeugpools berücksichtigt.

Aufgabe der Erfindung ist es, die Steuerung des elektrischen Ladens einer Gruppe von Fahrzeugen derart auszugestalten, dass effizient auch Anforderungen an eine Leistungserhöhung berücksichtigt werden.

Die Druckschrift WO 2011/009129 A1 beschreibt ein Verfahren zum intelligenten Laden von Fahrzeugen. In diesem Dokument wird unter anderem offenbart, dass die Nutzer von Fahrzeugen Ladeparameter des Ladevorgangs ihres Fahrzeugs spezifizieren können. Darüber hinaus wird beschrieben, dass in den Fahrzeugen von vorprogrammierten Ladeschemata in Antwort auf Echtzeit-Meldungen abgewichen werden kann, um den Energieverbrauch der Fahrzeuge bei überschüssiger elektrischer Energie zu erhöhen.

Das Dokument US 2012/0109403 A1 beschreibt ein Verfahren zur Verwaltung von Energiediensten für mobile Geräte und insbesondere auch Fahrzeuge. In dieser Druckschrift wird unter anderem offenbart, dass mobile Geräte ihren Energieverbrauch bzw. ihre Energieabgabe in Abhängigkeit von Veränderungen der Leistung von erneuerbaren Energiequellen anpassen können.

Die Druckschrift DE 10 2014 206 381 A1 offenbart ein Verfahren und eine Vorrichtung zum Laden des elektrischen Speichers einer Vielzahl von Fahrzeugen mit Elektroantrieb durch eine Vielzahl von Ladestationen. Die Ladevorgänge der Fahrzeuge werden über eine Steuereinheit koordiniert. Die Steuereinheit ist dazu eingerichtet, Ladeinformationen bezüglich der Vielzahl von Fahrzeugen sowie Netzinformationen von einem elektrischen Versorgungsnetz zu ermitteln, wobei die Netzinformationen Informationen bezüglich einer Sollleistung umfassen, die durch die Ladevorgänge der Vielzahl von Fahrzeugen vom elektrischen Versorgungsnetz abzunehmen ist. Die Steuereinheit ist ferner dazu eingerichtet, auf Basis der Ladeinformationen und auf Basis der Netzinformationen eine Vielzahl von Ladefahrplänen für die entsprechende Vielzahl von Fahrzeugen zu bestimmen, wobei ein erster Ladefahrplan für ein erstes Fahrzeug der Vielzahl von Fahrzeugen Informationen umfasst, die es der entsprechenden ersten Ladestation aus der Vielzahl von Ladestationen ermöglichen, den Ladevorgang des ersten Fahrzeugs autark durchzuführen.

Diese Aufgabe wird durch das Verfahren gemäß Patentanspruch 1 bzw. das Steuersystem gemäß Patentanspruch 6 gelöst. Weiterbildungen der Erfindung sind in den abhängigen Ansprüchen definiert.

Das erfindungsgemäße Verfahren dient zur Steuerung des elektrischen Ladens einer Gruppe von Fahrzeugen, welche elektrisch an ein Stromnetz eines Stromnetzbetreibers angeschlossen sind, wobei die jeweiligen Fahrzeuge aus dem Stromnetz Strom zum Laden eines fahrzeugseitigen Energiespeichers zum Antrieb des jeweiligen Fahrzeugs beziehen. Mit anderen Worten sind die Fahrzeuge elektrisch antreibbare Fahrzeuge, wie z.B. reine Elektrofahrzeuge oder Hybridfahrzeuge. In dem erfindungsgemäßen Verfahren sind vorab ein oder mehrere einzuhaltende Parameter des Ladevorgangs des fahrzeugseitigen Energiespeichers der jeweiligen Fahrzeuge festgelegt. Dabei kann ein Nutzer eines jeweiligen Fahrzeugs über eine jeweilige Benutzerschnittstelle zumindest einen Teil dieser Parameter verändern. Bevorzugte Ausführungsformen der genannten Parameter werden weiter unten beschrieben. Unter anderem können die Parameter z.B. eine gewünschte Abfahrtszeit des Fahrzeugs oder ein Zeitfenster spezifizieren, in dem das Laden des entsprechenden Fahrzeugs stattfinden soll.

In dem erfindungsgemäßen Verfahren kann ein zentrales Steuersystem mit den jeweiligen Fahrzeugen der Gruppe sowie mit einem Server des Stromnetzbetreibers kommunizieren. Unter einem zentralen Steuersystem ist dabei ein Steuersystem bzw. eine Steuereinrichtung zu verstehen, welche das Laden aller Fahrzeuge der Gruppe steuert. Dieses Steuersystem ist insbesondere über Software auf einem entsprechenden Server realisiert. Die einzuhaltenden Parameter bzw. eine Veränderung dieser Parameter sind dabei dem zentralen Steuersystem bekannt. Zum Beispiel werden sie über eine drahtlose Kommunikationsschnittstelle, die an die obige Benutzerschnittstelle angebunden ist, an das zentrale Steuersystem übermittelt.

In dem erfindungsgemäßen Verfahren führt das zentrale Steuersystem in Antwort auf einen empfangenen Erhöhungsbefehl einen Leistungserhöhungsvorgang gemäß einem Erhöhungsschema durch. Der Erhöhungsbefehl stammt dabei vom Server des Stromnetzbetreibers und legt einen Leistungsbetrag fest, um den die Leistungsaufnahme der Gruppe von Fahrzeugen aus dem Stromnetz zu erhöhen ist. Das Erhöhungsschema wird von dem zentralen Steuersystem basierend auf dem Leistungsbetrag des Erhöhungsbefehls ermittelt bzw. berechnet. Dieses ermittelte bzw. berechnete Erhöhungsschema spezifiziert eine temporäre Erhöhung der (ohne Erhöhungsschema geplanten bzw. prognostizierten) Ladeleistung des Ladevorgangs des Energiespeichers von einem oder mehreren Fahrzeugen einer Anzahl von vorgegebenen Fahrzeugen der Gruppe, so dass die Erhöhung der Leistungsaufnahme der Gruppe von Fahrzeugen um den Leistungsbetrag gemäß dem empfangenen Erhöhungsbefehl erreicht wird. Die Fahrzeuge der soeben definierten Anzahl von vorgegebenen Fahrzeugen sind solche Fahrzeuge aus der Gruppe, welche zur Teilnahme am Leistungserhöhungsvorgang ausgewählt sind und für welche im Leistungserhöhungsvorgang gemäß dem ermittelten Erhöhungsschema eine (durch das Steuersystem verursachte) Abweichung von dem oder den vorab festgelegten Parametern des Ladevorgangs der jeweiligen vorgegebenen Fahrzeuge erlaubt ist, und zwar unabhängig davon, ob von den Parametern tatsächlich abgewichen wird und ob für das jeweilige vorgegebene Fahrzeug tatsächlich eine temporäre Erhöhung der Ladeleistung festgelegt wird. Im Rahmen des Leistungserhöhungsvorgangs muss lediglich für zumindest eines der vorgegebenen Fahrzeuge eine temporäre Erhöhung der Ladeleistung spezifiziert sein. Die Auswahl der Fahrzeuge, die an dem Leistungserhöhungsvorgang teilnehmen, wird vorzugsweise durch das zentrale Steuersystem vorgenommen. Es können dabei nur solche Fahrzeuge zur Teilnahme an dem Leistungserhöhungsvorgang ausgewählt werden, für welche die Abweichung von dem oder den vorab festgelegten Parametern des Ladevorgangs auch erlaubt ist. Gegebenenfalls können auch automatisch alle Fahrzeuge der Gruppe, für welche eine Parameterabweichung erlaubt ist, an dem Leistungserhöhungsvorgang teilnehmen. In der Regel werden bei der Ermittlung des Erhöhungsschemas Rechenvorschriften verwendet, welche eine Abweichung der Parameter und damit die Auswirkungen für den Nutzer möglichst gering halten.

Im Falle, dass nach Empfang des obigen Erhöhungsbefehls und vor oder während des darauf basierenden Leistungserhöhungsvorgangs der Ladevorgang des Energiespeichers zumindest eines vorgegebenen Fahrzeugs mittels Änderung zumindest eines seiner Parameter durch den Nutzer verändert wird, überprüft das zentrale Steuersystem im Rahmen des erfindungsgemäßen Verfahrens, ob ein vorgegebenes Kriterium erfüllt ist. Das vorgegebene Kriterium ist dabei derart festgelegt, dass es dann erfüllt ist, wenn die Einhaltung des oder der Parameter des veränderten Ladevorgangs den Leistungsbetrag gemäß dem Erhöhungsschema nicht vermindert. Sofern nicht anders vermerkt, ist hier und im Folgenden unter dem zumindest einen vorgegebenen Fahrzeug ein solches Fahrzeug zu verstehen, bei dem vor oder während des Leistungserhöhungsvorgangs Parameter des Ladevorgangs verändert werden.

Erfindungsgemäß wird somit durch das zentrale Steuersystem überprüft, ob die Einhaltung einer vom Nutzer spezifizierten Parameterveränderung negative Auswirkungen auf den Leistungserhöhungsvorgang in dem Sinne hat, dass nicht mehr durchgehend die erwünschte Leistungserhöhung gemäß dem Leistungsbetrag des empfangenen Erhöhungsbefehls erreicht wird.

Falls das obige vorgegebene Kriterium erfüllt ist, d.h. wenn die Einhaltung der Parameter für das zumindest eine vorgegebene Fahrzeug keine negativen Auswirkungen auf den Leistungserhöhungsvorgang hat, wird durch das zentrale Steuersystem der Leistungserhöhungsvorgang gemäß dem Erhöhungsschema unter Teilnahme des zumindest einen vorgegebenen Fahrzeugs an dem Leistungserhöhungsvorgang und unter Einhaltung des oder der Parameter des veränderten Ladevorgangs begonnen oder fortgesetzt. Ist demgegenüber das vorgegebene Kriterium nicht erfüllt, wird von dem zentralen Steuersystem ein neues Erhöhungsschema basierend auf dem Leistungsbetrag des empfangenen Erhöhungsbefehls ohne Teilnahme des zumindest einen vorgegebenen Fahrzeugs ermittelt, woraufhin durch das zentrale Steuersystem der Leistungserhöhungsvorgang gemäß dem neuen Erhöhungsschema begonnen wird.

Das erfindungsgemäße Verfahren weist den Vorteil auf, dass bei manuellen Parameterveränderungen von Ladevorgängen ein bereits berechnetes Erhöhungsschema aufrecht erhalten werden kann, sofern die veränderten Parameter keine negativen Auswirkungen auf den Leistungserhöhungsvorgang derart haben, dass bei Einhaltung dieser Parameter die erwünschte Leistungserhöhung durchgehend nicht erreicht werden kann. Die Veränderung von Parametern führt somit nicht zwangsweise zur Berechnung eines neuen Erhöhungsschemas, wodurch Rechenressourcen im zentralen Steuersystem gespart werden. Darüber hinaus kann in Kombination mit einem Belohnungssystem, bei dem ein Nutzer für die Teilnahme an einem Leistungserhöhungsvorgang belohnt wird, das Nutzerverhalten positiv beeinflusst werden, da Nutzer einen Anreiz haben, bei der manuellen Veränderung von Parametern des Ladevorgangs für ihr Fahrzeug darauf zu achten, dass die Parameterveränderung nicht dazu führt, dass das Fahrzeug nicht mehr an dem Leistungserhöhungsvorgang teilnimmt.

Je nach Ausgestaltung des erfindungsgemäßen Verfahrens können die von einem Nutzer veränderbaren Parameter eines Ladevorgangs des Energiespeichers eines jeweiligen Fahrzeugs einen oder mehrere der folgenden Parameter umfassen:
- ein Zeitfenster, in dem der Energiespeicher des jeweiligen Fahrzeugs zu laden ist, beispielsweise ein Zeitfenster, in dem die Stromkosten gering sind, wobei auch das Laden außerhalb des Zeitfensters nicht ausgeschlossen ist;
- einen Leistungswert, mit dem der Energiespeicher des jeweiligen Fahrzeugs zu laden ist, und/oder einen maximalen Leistungswert, mit dem der Energiespeicher des jeweiligen Fahrzeugs maximal geladen werden soll;
- eine Abfahrtszeit des jeweiligen Fahrzeugs, wobei zur Abfahrtszeit ein vorgegebener Sollladezustand des Energiespeichers des jeweiligen Fahrzeugs zu erreichen ist;
- eine Information über eine Vorkonditionierung, welche eine von dem jeweiligen Fahrzeug benötigte Menge an elektrischer Energie vor Erreichen eines Abfahrtszeitpunkts festlegt, z.B. eine Energiemenge einer Heizung oder einer Klimaanlage, die vor dem Abfahrtszeitpunkt aktiviert werden soll;
- eine Information, wonach das Laden des Energiespeichers des jeweiligen Fahrzeugs bei Anschluss des Fahrzeugs an das Stromnetz sofort begonnen und bis zum Erreichen eines Sollladezustands fortgesetzt werden soll;
- einen Sollladezustand, der bis zu einem Abfahrtszeitpunkt des jeweiligen Fahrzeugs zu erreichen ist oder bis zu dem das jeweilige Fahrzeug ohne Spezifikation eines Abfahrtszeitpunkts maximal lädt.

In einer weiteren Ausführungsform des erfindungsgemäßen Verfahrens wird im Falle, dass das vorgegebene Kriterium erfüllt ist, durch das Steuersystem ferner sichergestellt, dass der Leistungserhöhungsvorgang gemäß dem Erhöhungsschema unter Teilnahme des zumindest einen vorgegebenen Fahrzeugs an dem Leistungserhöhungsvorgang und unter Einhaltung des oder der Parameter des veränderten Ladevorgangs nicht mehr (automatisch) durch das zentrale Steuersystem derart manipuliert wird, dass der veränderte Ladevorgang nochmals verändert wird. Mit dieser Variante der Erfindung wird erreicht, dass der Wunsch des Nutzers im Hinblick auf eine Parameterveränderung immer eingehalten wird.

Im erfindungsgemäßen Verfahrens berücksichtigt das zentrale Steuersystem bei der Überprüfung, ob das vorgegebene Kriterium erfüllt ist, einen Puffer, der eine Ladeeffizienz des Energiespeichers des zumindest einen vorgegebenen Fahrzeugs annimmt, welche gegenüber einer erwarteten Ladeeffizienz vermindert ist, um zu verhindern, dass die Erhöhung der Leistungsaufnahme der Gruppe von Fahrzeugen gemäß dem Erhöhungsschema unter Teilnahme des zumindest einen vorgegebenen Fahrzeugs an dem Leistungserhöhungsvorgang und unter Einhaltung des oder der Parameter des veränderten Ladevorgangs geringer als der Leistungsbetrag gemäß dem empfangenen Erhöhungsbefehl ist. Auf diese Weise werden etwaige Schwankungen beim Laden derart berücksichtigt, dass auch bei Auftreten dieser Schwankungen die Vorgabe einer Leistungserhöhung um den Leistungsbetrag des Erhöhungsbefehls erfüllt ist.

In einer bevorzugten Variante berücksichtigt das zentrale Steuersystem bei jeder Ermittlung eines Erhöhungsschemas einen Puffer, der eine Ladeeffizienz des Energiespeichers der jeweiligen vorgegebenen Fahrzeuge annimmt, welche gegenüber einer erwarteten Ladeeffizienz vermindert ist, um zu verhindern, dass die Erhöhung der Leistungsaufnahme der Gruppe von Fahrzeugen gemäß dem Erhöhungsschema geringer als der Leistungsbetrag gemäß dem empfangenen Erhöhungsbefehl ist.

In einer weiteren Ausführungsform des erfindungsgemäßen Verfahrens ist an das Stromnetz ein stationäres Energiespeichersystem angeschlossen. Dieses stationäre Energiespeichersystem ist vorzugsweise ein stationärer Batteriespeicher und wird durch das zentrale Steuersystem derart angesteuert, dass im Falle, dass die Erhöhung der Leistungsaufnahme der Gruppe von Fahrzeugen um den Leistungsbetrag gemäß dem Erhöhungsbefehl nicht ausschließlich durch die temporäre Erhöhung der Ladeleistung des Energiespeichers von vorgegebenen Fahrzeugen der Gruppe erreicht werden kann, die Leistungsaufnahme des stationären Energiespeichersystems aus dem Stromnetz erhöht oder die Leistungsabgabe des stationären Energiespeichersystems in das Stromnetz vermindert wird, so dass die Erhöhung der Leistungsaufnahme der Gruppe von Fahrzeugen, die durch temporäre Erhöhung der Ladeleistung des Ladevorgangs des Energiespeichers von vorgegebenen Fahrzeugen der Gruppe erreicht wird, zuzüglich des Betrags der Erhöhung der Leistungsaufnahme oder des Betrags der Verminderung der Leistungsabgabe des stationären Energiespeichersystems dem Leistungsbetrag gemäß dem Erhöhungsbefehl entspricht. Mit dieser Variante der Erfindung wird eine unzureichende Leistungserhöhung von fahrzeugseitigen Energiespeichern über ein stationäres Energiespeichersystem ausgeglichen.

In einer weiteren Variante des erfindungsgemäßen Verfahrens ist eine jeweilige Benutzerschnittstelle, über welche ein Nutzer eines jeweiligen Fahrzeugs zumindest einen Teil der Parameter des Ladevorgangs verändern kann, Teil eines mobilen (d.h. tragbaren) Geräts, wie z.B. eines Mobiltelefons, eines Tablets oder eines Laptops. Ebenso kann die Benutzerschnittstelle in dem jeweiligen Fahrzeug integriert sein. Auf diese Weise kann der Nutzer flexibel an beliebigen Orten bzw. im Fahrzeug seine Präferenzen bezüglich der Ladung des fahrzeugseitigen Energiespeichers anpassen.

Neben dem oben beschriebenen Verfahren betrifft die Erfindung ein zentrales Steuersystem zur Steuerung des elektrischen Ladens einer Gruppe von Fahrzeugen, welche elektrisch an ein Stromnetz eines Stromnetzbetreibers angeschlossen sind, wobei die jeweiligen Fahrzeuge Strom zum Laden eines fahrzeugseitigen Energiespeichers zum Antrieb des jeweiligen Fahrzeugs beziehen. Dabei sind ein oder mehrere einzuhaltende Parameter des Ladevorgangs des Energiespeichers der jeweiligen Fahrzeuge festgelegt und der Nutzer eines jeweiligen Fahrzeugs kann über eine jeweilige Benutzerschnittstelle zumindest einen Teil dieser Parameter verändern. Das zentrale Steuersystem kann mit den jeweiligen Fahrzeugen sowie mit einem Server des Stromnetzbetreibers kommunizieren. Das zentrale Steuersystem ist derart ausgestaltet, dass es das erfindungsgemäße Verfahren bzw. eine oder mehrere bevorzugte Varianten des erfindungsgemäßen Verfahrens ausführen kann.

Ausführungsbeispiele der Erfindung werden nachfolgend anhand der beigefügten Figuren detailliert beschrieben.

Es zeigen:
- Fig. 1: eine schematische Darstellung einer Infrastruktur, in der eine Ausführungsform des erfindungsgemäßen Verfahrens durchgeführt wird; und
- Fig. 2: ein Diagramm, welches beispielhaft ein Szenario zeigt, in dem das erfindungsgemäße Verfahren zur Anwendung kommt.

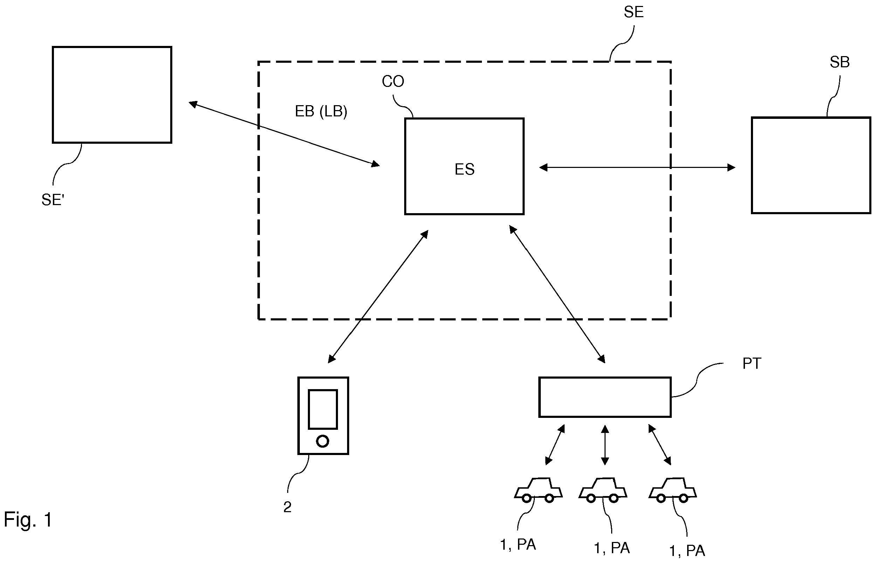

In Fig. 1 ist in schematischer Darstellung eine Infrastruktur zur Durchführung des erfindungsgemäßen Verfahrens dargestellt. Ein Kernbestandteil dieser Infrastruktur ist eine zentrale Steuereinheit CO, welche in einem Server SE integriert ist und zur Steuerung des Ladens einer Flotte aus mehreren elektrisch angetriebenen Fahrzeugen (d.h. der Antriebsbatterien dieser Fahrzeuge) dient. Gegebenenfalls kann die zentrale Steuereinheit auch aus mehreren parallel arbeitenden Servern/Modulen/Instanzen bestehen, welche sich an unterschiedlichen Orten befinden, um einen sog. "Single Point of Failure" zu vermeiden. Beispielhaft sind aus dieser Fahrzeugflotte drei Elektrofahrzeuge 1 wiedergegeben. Diese Fahrzeuge sind kommunikationstechnisch über ein Portal PT an die Steuereinheit CO angebunden. Ferner sind die Fahrzeuge 1 an ein Stromnetz (nicht gezeigt) angebunden, um hierüber deren Antriebsbatterien zu laden. Das Steuersystem CO hat über ein geeignetes Steuer-Backend (nicht gezeigt) Zugriff auf das Portal PT, welches wiederum mit den einzelnen Fahrzeugen 1, z.B. über SMS, kommunizieren kann. Mittels des Kommunikationswegs über das Portal PT kann die Steuereinheit CO an die einzelnen Fahrzeuge 1 Befehle zum temporären Erhöhen der Ladeleistung ihres Ladevorgangs basierend auf dem weiter unten beschriebenen Erhöhungsschema ES übermitteln.

In den einzelnen Fahrzeugen 1 sind jeweils Parameter hinterlegt, welche allgemein mit dem Bezugszeichen PA bezeichnet sind. Die Parameter betreffen die in den einzelnen Fahrzeugen durchzuführenden Ladevorgänge und sollen beim Laden der Fahrzeuge möglichst eingehalten werden. Die Parameter PA stehen auch dem Steuersystem CO zur Verfügung. Zum Beispiel können die Parameter über das Portal PT an das Steuersystem CO übertragen worden sein.

Zu jedem einzelnen Fahrzeug 1 gehört ein Nutzer, der über ein Smartphone 2 verfügt, wobei aus Übersichtlichkeitsgründen nur ein einzelnes Smartphone angedeutet ist. Mit diesem Smartphone kann der Nutzer zum einen über das nicht gezeigte Steuer-Backend mit dem Steuersystem CO und zum anderen über das Portal PT mit seinem Fahrzeug kommunizieren. Insbesondere kann der Nutzer die Parameter PA des Ladevorgangs seines Fahrzeugs am Smartphone verändern, wobei diese Information zum einen an das Steuersystem CO und zum anderen an das jeweilige Fahrzeug weitergegeben wird.

In der hier beschriebenen Variante der Erfindung kann der Nutzer als Parameter PA unter anderem festlegen, zu welchem zukünftigen Abfahrtszeitpunkt das Fahrzeug in Betrieb genommen werden soll und wie der Sollladezustand der Antriebsbatterie zu diesem Abfahrtszeitpunkt sein soll. Gegebenenfalls kann der Benutzer auch ein sog. "Sofort-Laden" spezifizieren, bei dem das Fahrzeug unmittelbar nach Anschluss an das Stromnetz bis zu einem vorbestimmten Sollladezustand ununterbrochen geladen werden soll, wobei in diesem Fall kein Abfahrtszeitpunkt spezifiziert werden muss. Gegebenenfalls kann der Nutzer auch eine sog. Vorkonditionierung als Parameter festlegen. Bei dieser Vorkonditionierung wird eine von dem Fahrzeug benötigte Menge an elektrischer Energie vor Erreichen des Abfahrtszeitpunkts spezifiziert. Die Energiemenge wird z.B. für die Heizung oder die Klimaanlage des Kraftfahrzeugs benötigt, welche vor dem Abfahrtszeitpunkt bereits aktiviert werden soll.

Das Steuersystem CO kommuniziert gemäß Fig. 1 auch mit einem Server SE', der zu einem Stromnetzbetreiber gehört, an dessen Stromnetz die Fahrzeuge 1 der Fahrzeugflotte bzw. deren Batterien geladen werden. Darüber hinaus ist in der Infrastruktur der Fig. 1 ein Energiespeichersystem in der Form eines stationären Batteriespeichers SB vorgesehen, der über das Steuersystem CO mittels einer geeigneten Schnittstelle ansteuerbar ist und zu dem Betreiber des Steuersystems CO gehört. Der Betreiber des Steuersystems ist z.B. der Hersteller der Fahrzeuge 1 der Fahrzeugflotte.

Ein Ziel der Infrastruktur der Fig. 1 besteht darin, dass der Stromnetzbetreiber über seinen Server SE' Erhöhungsbefehle EB an das Steuersystem CO im Falle von Überkapazitäten in seinem Stromnetz schicken kann, woraufhin das Steuersystem in geeigneter Weise die Ladeleistung zumindest eines Teils der gerade ladenden Fahrzeuge 1 für eine vorgegebene Zeitspanne erhöht, um hierdurch die Überkapazitäten im Stromnetz abzufangen. Die Zeitspanne der Leistungserhöhung ist in der hier beschriebenen Ausführungsform fest vorgegeben und liegt bei einer Stunde.

In dem Erhöhungsbefehl EB, der von dem Server SE' an das Steuersystem CO übermittelt wird, ist ein Leistungsbetrag LB festgelegt, um den mittels des Steuersystems CO die Leistungsabgabe aus dem Stromnetz zu den ladenden Fahrzeugen 1 zu erhöhen ist. Basierend auf diesem Leistungsbetrag LB ermittelt das Steuersystem CO ein Erhöhungsschema ES, welches angibt, für welche Fahrzeuge aus einer Menge von vorgegebenen Fahrzeugen der Fahrzeugflotte die Ladeleistung temporär erhöht werden soll. Anschließend wird der Leistungserhöhungsvorgang gemäß dem Erhöhungsschema durch die Steuereinheit CO ausgeführt. Die soeben genannten vorgegebenen Fahrzeuge sind dabei vom Steuersystem CO zur Teilnahme an dem Leistungserhöhungsvorgang ausgewählt worden. Die vorgegebenen Fahrzeuge erfüllen dabei die Bedingung, dass vom Nutzer spezifizierte Parameter PA durch das Steuersystem für den Leistungserhöhungsvorgang nicht eingehalten werden müssen, und zwar unabhängig davon, ob von den Parametern tatsächlich abgewichen wird und ob für das entsprechende vorgegebene Fahrzeug tatsächlich die Ladeleistung erhöht wird. Im Rahmen des Leistungserhöhungsvorgangs werden entsprechende Befehle zur Anpassung der Ladeleistung an diejenigen vorgegebenen Fahrzeuge gegeben, deren Ladeleistung tatsächlich erhöht wird. In diesem Sinne wird ein Leistungserhöhungsvorgang basierend auf dem Erhöhungsschema ES mittels des Steuersystems CO durchgeführt.

Wie soeben erwähnt, kann bei diesem Leistungserhöhungsvorgang gegebenenfalls von den eigentlich einzuhaltenden Parametern PA der Ladevorgänge abgewichen werden, so dass unter Umständen Präferenzen des jeweiligen Nutzers des Fahrzeugs zeitweise nicht beachtet werden. Dies kann für den einzelnen Nutzer nachteilig sein. Deshalb kann der Nutzer z.B. über sein Smartphone 2 spezifizieren, dass er an Leistungserhöhungsvorgängen nicht teilnehmen will (Opt-out). Um den Nutzer jedoch dazu zu bringen, dass sein Fahrzeug an Leistungserhöhungsvorgängen trotz möglicher Nachteile teilnimmt, wird ein geeignetes Belohnungssystem verwendet, gemäß dem der Nutzer einen monetären Ausgleich erhält, wenn er an Leistungserhöhungsvorgängen teilnimmt.

Es kann nunmehr der Fall auftreten, dass die Parameter PA des Ladevorgangs eines Fahrzeugs, welches an einem bevorstehenden Leistungserhöhungsvorgang teilnimmt, durch den Nutzer kurzfristig verändert werden. Um dieser Veränderung Rechnung zu tragen, wird herkömmlicherweise dieses Fahrzeug nicht mehr in dem bevorstehenden Leistungserhöhungsvorgang berücksichtigt, was jedoch aufgrund der veränderten Anzahl von Fahrzeugen dazu führt, dass ein neues Erhöhungsschema durch das Steuersystem CO berechnet werden muss. Darüber hinaus hat ein Nutzer, der kurzfristig entsprechende Parameter verändert, überhaupt keinen Anreiz, diese Parameterveränderung so auszugestalten, dass eine Teilnahme seines Fahrzeugs trotz veränderter Parameter an dem bevorstehenden Leistungserhöhungsvorgang weiterhin möglich ist. Dies ist dann der Fall, wenn mit dem bevorstehenden Leistungserhöhungsvorgang weiterhin trotz veränderter Parameter die Leistungserhöhung um den Leistungsbetrag LB erreicht werden kann.

Erfindungsgemäß ist nunmehr an eine Veränderung von Parametern des Ladevorgangs eines Fahrzeugs durch einen Nutzer nicht automatisch die Nicht-Teilnahme an dem entsprechenden Leistungserhöhungsvorgang gekoppelt. Vielmehr wird durch das Steuersystem CO zunächst überprüft, ob unter Einhaltung der veränderten Parameter der Leistungserhöhungsvorgang gemäß dem Erhöhungsschema ES unverändert ausgeführt werden kann, um die erwünschte Leistungserhöhung um den Leistungsbetrag LB des Erhöhungsbefehls EB zu erreichen. Mit anderen Worten wird durch das Steuersystem überprüft, ob die Einhaltung der Parameter des veränderten Ladevorgangs den Leistungsbetrag LB verringert. Sollte es nicht zu einer solchen Verringerung kommen, bleibt das entsprechende Fahrzeug mit den veränderten Parametern weiterhin am Leistungserhöhungsvorgang beteiligt und der Leistungserhöhungsvorgang wird gemäß dem Erhöhungsschema ES durchgeführt. Wird hingegen der Leistungsbetrag LB vermindert, berechnet das Steuersystem CO ein neues Erhöhungsschema, und zwar ohne die Teilnahme des Fahrzeugs mit den veränderten Parametern. Auf diese Weise wird immer sichergestellt, dass eine Erhöhung der aus dem Stromnetz entnommenen Leistung um den Leistungsbetrag des Erhöhungsbefehls erreicht wird. Gleichzeitig werden jedoch auch die Wünsche der Nutzer betreffend eine Veränderung der Parameter eines Ladevorgangs geeignet berücksichtigt.

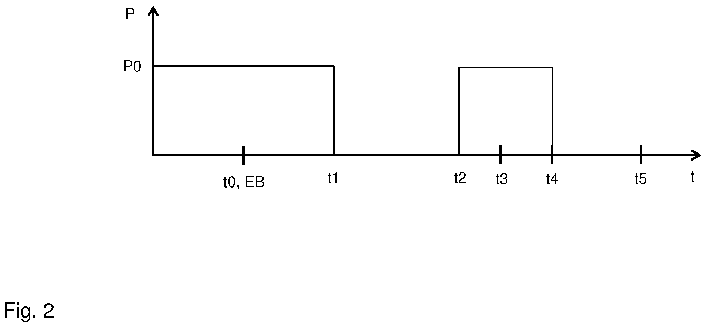

Fig. 2 zeigt ein Szenario, in dem das erfindungsgemäße Verfahren zum Einsatz kommt. In dieser Figur ist ein Diagramm gezeigt, in dem entlang der Abszisse die Zeit t und entlang der Ordinate die Leistungsaufnahme P durch einen Energiespeicher eines solchen Fahrzeugs aus Fig. 1 angedeutet ist, für das Parameter seines Ladevorgangs durch einen Nutzer verändert werden.

In dem Szenario der Fig. 2 ist das Fahrzeug bei Anschluss an das Stromnetz in dem Zustand "Sofort-Laden". Demzufolge soll das Fahrzeug mit dem Leistungswert P0 solange geladen werden, bis ein vorgegebener Sollladezustand seiner Antriebsbatterie erreicht ist. Darüber hinaus wurde durch den Nutzer des Fahrzeugs ein Abfahrtszeitpunkt auf den Zeitpunkt t5 festgelegt. Aufgrund des aktuellen Ladezustands der Batterie wird der Sollladezustand zu einem Zeitpunkt erreicht, der kurz vor dem Zeitpunkt t2 liegt. Zum Zeitpunkt t0 wird im Steuersystem CO ein Erhöhungsbefehl EB vom Server SE des Stromnetzbetreibers empfangen. Gemäß diesem Erhöhungsbefehl ist im Zeitraum zwischen den Zeitpunkten t2 und t3 die von den Antriebsbatterien der Fahrzeugflotte entnommene Leistung aufgrund einer Überkapazität im Stromnetz zu erhöhen.

Um die Leistungserhöhung gemäß dem Erhöhungsbefehl EB zu erreichen, weicht das Steuersystem CO von dem Parameter "Sofort-Laden" des betrachteten Fahrzeug ab. Stattdessen wird ein Ladezeitfenster mit Ladebeginn zum Zeitpunkt t2 und Ladeende zum Zeitpunkt t4 festgelegt. Dieses Ladezeitfenster überdeckt den Zeitraum zwischen dem Zeitpunkt t2 und t3, in welchem eine erhöhte Leistung bereitzustellen ist. Darüber hinaus wird durch das Steuersystem CO eine Ladepause für die Antriebsbatterie des betrachteten Fahrzeugs zwischen den Zeitpunkten t1 und den Zeitpunkt t2 festgelegt. Diese Ladepause ist erforderlich, da ansonsten der Sollladezustand des Fahrzeugs vor dem Zeitpunkt t2 erreicht werden würde und damit eine Leistungsaufnahme der Antriebsbatterie im Zeitraum zwischen t2 und t4 nicht möglich wäre.

Zu einem Zeitpunkt zwischen t0 und t3 ändert der Nutzer des Fahrzeugs nunmehr den Abfahrtszeitpunkt, indem er eine spätere Abfahrtszeit festlegt, jedoch das Ladezeitfenster zwischen den Zeitpunkten t2 und t4 unverändert lässt. Diese Information wird von dem Steuersystem CO ausgewertet, welches dann feststellt, dass dieser veränderte Abfahrtszeitpunkt nicht dazu führt, dass der Zeitraum, in dem die Leistung zu erhöhen ist (d.h. der Zeitraum zwischen t2 und t3), verkürzt wird. Dies wäre dann der Fall, wenn der Abfahrtszeitpunkt auf einen Zeitpunkt verschoben würde, der vor t3 liegt. Demzufolge bleibt das Fahrzeug weiterhin Teilnehmer an dem Leistungserhöhungsvorgang und es wird kein neues Erhöhungsschema berechnet.

In einem anderen Fall verändert der Nutzer zu einem Zeitpunkt zwischen t0 und t3 das Ladezeitfenster derart, dass der Zeitpunkt t4 nach vorne verschoben wird, jedoch nach dem Zeitpunkt t3 liegt. Auch dieser Fall führt nicht zu einer Verkürzung des Zeitraums, in dem eine erhöhte Leistung bereitzustellen ist. Folglich wird auch in diesem Fall die Teilnahme des Fahrzeugs an dem Leistungserhöhungsvorgang nicht beendet und das berechnete Erhöhungsschema weiterverwendet.

Im Folgenden wird ein weiteres Szenario erläutert, in dem das erfindungsgemäße Verfahren zum Einsatz kommt. Es wird dabei wiederum davon ausgegangen, dass der Nutzer in dem betrachteten Fahrzeug den Zustand "Sofort-Laden" eingestellt hat. Schließlich wird ein Leistungserhöhungsbefehl EB in dem zentralen Steuersystem CO empfangen. Das Steuersystem stellt dabei fest, dass das Fahrzeug aufgrund seines aktuellen Ladezustands sicher bzw. mit sehr hoher Wahrscheinlichkeit länger laden wird als der Zeitraum, der in dem Erhöhungsbefehl EB als Zeitspanne zur Bereitstellung erhöhter Leistung festgelegt ist. Demzufolge wird das betrachtete Fahrzeug durch das zentrale Steuersystem zur Teilnahme an dem Leistungserhöhungsvorgang ausgewählt. Gleichzeitig wird der Parameter "Sofort-Laden" nicht verändert, denn es ist davon auszugehen, dass im Zeitraum der Leistungserhöhung auch tatsächlich Leistung durch das Fahrzeug bezogen wird.

Es tritt nunmehr der Fall ein, dass der Fahrzeugnutzer die eingestellten Parameter dahingehend verändert, dass er anstatt des Zustands "Sofort-Laden" ein Ladezeitfenster einstellt, in dem das Fahrzeug laden soll. Er wählt dieses Ladezeitfenster dabei derart, dass es auch den Zeitraum abdeckt, in dem eine Leistungserhöhung gemäß dem Erhöhungsbefehl auftreten soll. Demzufolge wird auch mit der Parameterveränderung sichergestellt, dass im Zeitraum der Leistungserhöhung das entsprechende Fahrzeug Leistung zum Laden seiner Antriebsbatterie bezieht. Das Fahrzeug nimmt somit weiterhin an dem Leistungserhöhungsvorgang teil und es wird kein neues Erhöhungsschema berechnet.

Der in Fig. 1 gezeigte stationäre Batteriespeicher SB wird in der hier beschriebenen Ausführungsform nur dann verwendet, wenn die durch den Befehl des Servers SE' spezifizierte Leistungserhöhung nicht durch die Batterien der Fahrzeuge des Fahrzeugpools abgedeckt werden kann. In diesem Fall wird über eine erhöhte Leistungsaufnahme des Batteriespeichers aus dem Stromnetz bzw. eine verminderte Leistungsabgabe des Batteriespeichers in das Stromnetz erreicht, so dass sich die gewünschte Erhöhung der Leistung in dem Stromnetz ergibt.

Die im Vorangegangenen beschriebenen Ausführungsformen der Erfindung weisen eine Reihe von Vorteilen auf. Insbesondere wird kontextabhängig durch das Steuersystem automatisch ermittelt, ob ein Fahrzeug mit veränderten Parametern seines Ladevorgangs an dem entsprechenden Leistungserhöhungsvorgang weiterhin teilnimmt. Es handelt sich in diesem Sinne um ein kontextabhängiges Opt-out, welches nicht explizit durch einen Nutzer durchgeführt werden muss. Bei Verwendung eines Belohnungssystems, bei dem ein Nutzer für die Teilnahme an einem Leistungserhöhungsvorgang belohnt wird, ermöglicht dieses Verfahren eine Stimulation des Nutzers dahingehend, dass er Parameter manuell derart verändert, dass er weiterhin an einem Leistungserhöhungsvorgang teilnimmt. Herkömmlicherweise wird der Nutzer bei jeder manuellen Veränderung der Parameter aus der Teilnahme am Leistungserhöhungsvorgang ausgeschlossen. Das erfindungsgemäße Verfahren stellt ferner sicher, dass manuell veränderte Parameter auch bei der weiteren Teilnahme des Fahrzeugs am Leistungserhöhungsvorgang eingehalten werden und somit dem Nutzerwunsch entsprochen wird.

### Bezugszeichenliste

- 1: Fahrzeuge
- 2: Smartphone
- CO: zentrales Steuersystem
- SE, SE': Server
- SB: stationärer Batteriespeicher
- PT: Portal
- EB: Erhöhungsbefehl
- LB: Leistungsbetrag
- ES: Erhöhungsschema
- t: Tageszeit
- t1, t2, ..., t5: Zeitpunkte
- P: Leistung
- P0: Leistungswert

## Patentansprüche

1. Verfahren zur Steuerung des elektrischen Ladens einer Gruppe von Fahrzeugen (1), welche elektrisch an ein Stromnetz eines Stromnetzbetreibers angeschlossen sind, wobei die jeweiligen Fahrzeuge (1) aus dem Stromnetz Strom zum Laden eines fahrzeugseitigen Energiespeichers zum Antrieb des jeweiligen Fahrzeugs (1) beziehen, wobei ein oder mehrere einzuhaltende Parameter (PA) des Ladevorgangs des Energiespeichers der jeweiligen Fahrzeuge (1) festgelegt sind und ein Nutzer eines jeweiligen Fahrzeugs (1) über eine jeweilige Benutzerschnittstelle zumindest einen Teil dieser Parameter (PA) verändern kann, wobei ein zentrales Steuersystem (CO) mit den jeweiligen Fahrzeugen (1) der Gruppe sowie mit einem Server (SE') des Stromnetzbetreibers kommunizieren kann, wobei
- das zentrale Steuersystem (CO) in Antwort auf einen empfangenen Erhöhungsbefehl (EB) einen Leistungserhöhungsvorgang gemäß einem Erhöhungsschema (ES) durchführt, wobei der Erhöhungsbefehl (EB) vom Server (SE') des Stromnetzbetreibers stammt und einen Leistungsbetrag (LB) festlegt, um den die Leistungsaufnahme der Gruppe von Fahrzeugen (1) aus dem Stromnetz zu erhöhen ist, und wobei das Erhöhungsschema (ES) von dem zentralen Steuersystem (CO) basierend auf dem Leistungsbetrag (LB) des Erhöhungsbefehls (EB) ermittelt wird und eine temporäre Erhöhung der Ladeleistung des Ladevorgangs des Energiespeichers von einem oder mehreren Fahrzeugen (1) einer Anzahl von vorgegebenen Fahrzeugen (1) der Gruppe derart spezifiziert, dass die Erhöhung der Leistungsaufnahme der Gruppe von Fahrzeugen (1) um den Leistungsbetrag (LB) gemäß dem empfangenen Erhöhungsbefehl (EB) erreicht wird, wobei die Fahrzeuge der Anzahl von vorgegebenen Fahrzeugen (1) zur Teilnahme an dem Leistungserhöhungsvorgang ausgewählt sind und für die Anzahl von vorgegebenen Fahrzeugen (1) im Leistungserhöhungsvorgang gemäß dem ermittelten Erhöhungsschema (ES) eine durch das zentrale Steuersystem (CO) verursachte Abweichung von dem oder den Parametern (PA) des Ladevorgangs der jeweiligen vorgegebenen Fahrzeuge (1) erlaubt ist;
- im Falle, dass nach Empfang des Erhöhungsbefehls (EB) und vor oder während des Leistungserhöhungsvorgangs der Ladevorgang des Energiespeichers zumindest eines vorgegebenen Fahrzeugs (1) mittels Änderung zumindest eines seiner Parameter (P) durch den Nutzer verändert wird, durch das zentrale Steuersystem (CO) überprüft wird, ob ein vorgegebenes Kriterium erfüllt ist, wobei das vorgegebene Kriterium dann erfüllt ist, wenn die Einhaltung des oder der Parameter (PA) des veränderten Ladevorgangs den Leistungsbetrag (LB) gemäß dem Erhöhungsbefehl (ES) nicht vermindert, wobei das zentrale Steuersystem (CO) bei der Überprüfung, ob das vorgegebene Kriterium erfüllt ist, einen Puffer berücksichtigt, der eine Ladeeffizienz des Energiespeichers des zumindest einen vorgegebenen Fahrzeugs (1) annimmt, welche gegenüber einer erwarteten Ladeeffizienz vermindert ist, um zu verhindern, dass die Erhöhung der Leistungsaufnahme der Gruppe von Fahrzeugen (1) gemäß dem Erhöhungsschema (ES) unter Teilnahme des zumindest einen vorgegebenen Fahrzeugs (1) an dem Leistungserhöhungsvorgang und unter Einhaltung des oder der Parameter (PA) des veränderten Ladevorgangs geringer als der Leistungsbetrag (LB) gemäß dem empfangenen Erhöhungsbefehl (EB) ist;
- im Falle, dass das vorgegebene Kriterium erfüllt ist, durch das zentrale Steuersystem (CO) der Leistungserhöhungsvorgang gemäß dem Erhöhungsschema (ES) unter Teilnahme des zumindest einen vorgegebenen Fahrzeugs (1) an dem Leistungserhöhungsvorgang und unter Einhaltung des oder der Parameter (PA) des veränderten Ladevorgangs begonnen oder fortgesetzt wird und ansonsten von dem zentralen Steuersystem (CO) ein neues Erhöhungsschema basierend auf dem Leistungsbetrag (LB) des Erhöhungsbefehls (EB) ohne Teilnahme des zumindest einen vorgegebenen Fahrzeugs (1) ermittelt wird, woraufhin durch das zentrale Steuersystem (CO) der Leistungserhöhungsvorgang gemäß dem neuen Erhöhungsschema begonnen wird.

2. Verfahren nach Anspruch 1, **dadurch gekennzeichnet, dass** die von einem Nutzer veränderbaren Parameter (PA) des Ladevorgangs des Energiespeichers eines jeweiligen Fahrzeugs (1) einen oder mehrere der folgenden Parameter umfassen:
- ein Zeitfenster, in dem der Energiespeicher des jeweiligen Fahrzeugs (1) zu laden ist;
- einen Leistungswert, mit dem der Energiespeicher des jeweiligen Fahrzeugs (1) zu laden ist, und/oder einen maximalen Leistungswert, mit dem der Energiespeicher des jeweiligen Fahrzeugs (1) maximal geladen werden soll;
- eine Abfahrtszeit des jeweiligen Fahrzeugs (1), wobei zur Abfahrtszeit ein vorgegebener Solladezustand des Energiespeichers des jeweiligen Fahrzeugs (1) zu erreichen ist;
- eine Information über eine Vorkonditionierung, welche eine von dem jeweiligen Fahrzeug (1) benötigte Menge an elektrischer Energie vor Erreichen eines Abfahrtszeitpunkts festlegt;
- eine Information, wonach das Laden des Energiespeichers des jeweiligen Fahrzeugs (1) bei Anschluss des Fahrzeugs an das Stromnetz sofort begonnen und bis zum Erreichen eines Sollladezustands fortgesetzt werden soll;
- einen Solladezustand, der bis zu einem Abfahrtszeitpunkt des jeweiligen Fahrzeugs zu erreichen ist oder bis zu dem das jeweilige Fahrzeug ohne Spezifikation eines Abfahrtszeitpunkts maximal lädt.

3. Verfahren nach einem der vorhergehenden Ansprüche, **dadurch gekennzeichnet, dass** im Falle, dass das vorgegebene Kriterium erfüllt ist, ferner sichergestellt wird, dass der Leistungserhöhungsvorgang gemäß dem Erhöhungsschema (ES) unter Teilnahme des zumindest einen vorgegebenen Fahrzeugs (1) an dem Leistungserhöhungsvorgang und unter Einhaltung des oder der Parameter (PA) des veränderten Ladevorgangs nicht mehr durch das zentrale Steuersystem (CO) derart manipuliert wird, dass der veränderte Ladevorgang nochmals verändert wird.

4. Verfahren nach einem der vorhergehenden Ansprüche, **dadurch gekennzeichnet, dass** an das Stromnetz ein stationäres Energiespeichersystem (SB) angeschlossen ist, das durch das zentrale Steuersystem (CO) derart gesteuert wird, dass im Falle, dass die Erhöhung der Leistungsaufnahme der Gruppe von Fahrzeugen (1) um den Leistungsbetrag (LB) gemäß dem Erhöhungsbefehl (EB) nicht ausschließlich durch temporäre Erhöhung der Ladeleistung des Ladevorgangs des Energiespeicher von vorgegebenen Fahrzeugen (1) der Gruppe erreicht werden kann, die Leistungsaufnahme des stationären Energiespeichersystems (SB) aus dem Stromnetz erhöht oder die Leistungsabgabe des stationären Energiespeichersystems (SB) in das Stromnetz vermindert wird, so dass die Erhöhung der Leistungsaufnahme der Gruppe von Fahrzeugen (1), die durch temporäre Erhöhung der Ladeleistung des Ladevorgangs des Energiespeichers von vorgegebenen Fahrzeugen (1) der Gruppe erreicht wird, zuzüglich des Betrags der Erhöhung der Leistungsaufnahme oder der Verminderung der Leistungsabgabe des stationären Energiespeichersystems (SB) dem Leistungsbetrag (LB) gemäß dem Erhöhungsbefehl (EB) entspricht.

5. Verfahren nach einem der vorhergehenden Ansprüche, **dadurch gekennzeichnet, dass** eine jeweilige Benutzerschnittstelle, über welche ein Nutzer eines jeweiligen Fahrzeugs (1) zumindest einen Teil der Parameter (PA) des Ladevorgangs verändern kann, Teil eines mobilen Geräts ist oder in dem jeweiligen Fahrzeug (1) integriert ist.

6. Zentrales Steuersystem zur Steuerung des elektrischen Ladens einer Gruppe von Fahrzeugen (1), welche elektrisch an ein Stromnetz eines Stromnetzbetreibers angeschlossen sind, wobei die jeweiligen Fahrzeuge (1) Strom zum Laden eines fahrzeugseitigen Energiespeichers zum Antrieb des jeweiligen Fahrzeugs (1) beziehen, wobei ein oder mehrere einzuhaltende Parameter (PA) des Ladevorgangs des Energiespeichers der jeweiligen Fahrzeuge (1) festgelegt sind und ein Nutzer eines jeweiligen Fahrzeugs (1) über eine jeweilige Benutzerschnittstelle zumindest einen Teil dieser Parameter (PA) verändern kann, wobei das zentrale Steuersystem (CO) mit den jeweiligen Fahrzeugen (1) sowie mit einem Server (SE') des Stromnetzbetreibers kommunizieren kann, wobei das zentrale Steuersystem derart ausgestaltet ist, dass
- das zentrale Steuersystem (CO) in Antwort auf einen empfangenen Erhöhungsbefehl (EB) einen Leistungserhöhungsvorgang gemäß einem Erhöhungsschema durchführt, wobei der Erhöhungsbefehl vom Server (SE') des Stromnetzbetreibers stammt und einen Leistungsbetrag (LB) festlegt, um den die Leistungsaufnahme der Gruppe von Fahrzeugen (1) aus dem Stromnetz zu erhöhen ist, und wobei das Erhöhungsschema (ES) von dem zentralen Steuersystem (CO) basierend auf dem Leistungsbetrag (LB) des Erhöhungsbefehl (EB) ermittelt wird und eine temporäre Erhöhung der Ladeleistung des Ladevorgangs des Energiespeichers von einem oder mehreren Fahrzeugen (1) einer Anzahl von vorgegebenen Fahrzeugen der Gruppe derart spezifiziert, dass die Erhöhung der Leistungsaufnahme der Gruppe von Fahrzeugen (1) um den Leistungsbetrag (LB) gemäß dem empfangenen Erhöhungsbefehl (EB) erreicht wird, wobei die Fahrzeuge der Anzahl von vorgegebenen Fahrzeugen (1) zur Teilnahme an dem Leistungserhöhungsvorgang ausgewählt sind und für die Anzahl von vorgegebenen Fahrzeugen (1) im Leistungserhöhungsvorgang gemäß dem ermittelten Erhöhungsschema (ES) eine durch das zentrale Steuersystem (CO) verursachte Abweichung von dem oder den Parametern (PA) des Ladevorgangs der jeweiligen vorgegebenen Fahrzeuge (1) erlaubt ist;
- im Falle, dass nach Empfang des Erhöhungsbefehls (EB) und vor oder während des Leistungserhöhungsvorgangs der Ladevorgang des Energiespeichers zumindest eines vorgegebenen Fahrzeugs (1) mittels Änderung zumindest eines seiner Parameter (P) durch den Nutzer verändert wird, durch das zentrale Steuersystem (CO) überprüft wird, ob ein vorgegebenes Kriterium erfüllt ist, wobei das vorgegebene Kriterium dann erfüllt ist, wenn die Einhaltung des oder der Parameter (PA) des veränderten Ladevorgangs den Leistungsbetrag (LB) gemäß dem Erhöhungsbefehl (ES) nicht vermindert, wobei das zentrale Steuersystem (CO) bei der Überprüfung, ob das vorgegebene Kriterium erfüllt ist, einen Puffer berücksichtigt, der eine Ladeeffizienz des Energiespeichers des zumindest einen vorgegebenen Fahrzeugs (1) annimmt, welche gegenüber einer erwarteten Ladeeffizienz vermindert ist, um zu verhindern, dass die Erhöhung der Leistungsaufnahme der Gruppe von Fahrzeugen (1) gemäß dem Erhöhungsschema (ES) unter Teilnahme des zumindest einen vorgegebenen Fahrzeugs (1) an dem Leistungserhöhungsvorgang und unter Einhaltung des oder der Parameter (PA) des veränderten Ladevorgangs geringer als der Leistungsbetrag (LB) gemäß dem empfangenen Erhöhungsbefehl (EB) ist;
- im Falle, dass das vorgegebene Kriterium erfüllt ist, durch das zentrale Steuersystem (CO) der Leistungserhöhungsvorgang gemäß dem Erhöhungsschema (ES) unter Teilnahme des zumindest einen vorgegebenen Fahrzeugs (1) an dem Leistungserhöhungsvorgang und unter Einhaltung des oder der Parameter (PA) des veränderten Ladevorgangs des zumindest einen vorgegebenen Fahrzeugs (1) begonnen oder fortgesetzt wird und ansonsten von dem zentralen Steuersystem (CO) ein neues Erhöhungsschema basierend auf dem Leistungsbetrag (LB) des Erhöhungsbefehls (EB) ohne Teilnahme des zumindest einen vorgegebenen Fahrzeugs (1) ermittelt wird und durch das zentrale Steuersystem (CO) der Leistungserhöhungsvorgang gemäß dem neuen Erhöhungsschema begonnen oder fortgesetzt wird.

7. Steuersystem nach Anspruch 6, **dadurch gekennzeichnet, dass** das Steuersystem zur Durchführung eines Verfahrens nach einem der Ansprüche 2 bis 5 eingerichtet ist.

## Claims

1. Method for controlling the electrical charging of a group of vehicles (1) electrically connected to an electricity grid of an electricity grid operator, wherein the respective vehicles (1) draw power from the electricity grid for the purpose of charging a vehicle-based energy store for driving the respective vehicle (1), one or more parameters (PA) to be observed for the charging operation for the energy store of the respective vehicles (1) being stipulated and a user of a respective vehicle (1) being able to use a respective user interface to alter at least some of these parameters (PA), wherein a central control system (CO) can communicate with the respective vehicles (1) in the group and with a server (SE') of the electricity grid operator, wherein
- the central control system (CO) responds to a received increase command (EB) by performing a power increase operation according to an increase scheme (ES), wherein the increase command (EB) comes from the server (SE') of the electricity grid operator and stipulates an amount of power (LB) by which the power draw by the group of vehicles (1) from the electricity grid needs to be increased, and wherein the increase scheme (ES) is ascertained by the central control system (CO) on the basis of the amount of power (LB) in the increase command (EB) and specifies a temporary increase in the charging power of the charging operation for the energy store of one or more vehicles (1) in a number of prescribed vehicles (1) in the group such that the increase in the power draw by the group of vehicles (1) by the amount of power (LB) according to the received increase command (EB) is achieved, the vehicles in the number of prescribed vehicles (1) having been selected to participate in the power increase operation and a divergence, caused by the central control system (CO), from the parameter(s) (PA) of the charging operation for the respective prescribed vehicles (1) being permitted for the number of prescribed vehicles (1) in the power increase operation according to the ascertained increase scheme (ES);
- in the event of the charging operation for the energy store of at least one prescribed vehicle (1) being altered by the user by means of a change to at least one of its parameters (P) after reception of the increase command (EB) and before or during the power increase operation, the central control system (CO) checks whether a prescribed criterion is satisfied, the prescribed criterion being satisfied if the observance of the parameter(s) (PA) of the altered charging operation does not decrease the amount of power (LB) according to the increase command (ES), wherein, during the check to determine whether the prescribed criterion is satisfied, the central control system (CO) takes into consideration a buffer that assumes a charging efficiency for the energy store of the at least one prescribed vehicle (1) that is decreased in comparison with an expected charging efficiency, in order to prevent the increase in the power draw by the group of vehicles (1) according to the increase scheme (ES) from being smaller than the amount of power (LB) according to the received increase command (EB) while the at least one prescribed vehicle (1) is participating in the power increase operation and while the parameter (s) (PA) of the altered charging operation is/are observed;
- in the event of the prescribed criterion being satisfied, the central control system (CO) begins or continues the power increase operation according to the increase scheme (ES) while the at least one prescribed vehicle (1) participates in the power increase operation and while the parameter (s) (PA) of the altered charging operation is/are observed, and otherwise the central control system (CO) ascertains a new increase scheme on the basis of the amount of power (LB) in the increase command (EB) without the participation of the at least one prescribed vehicle (1), after which the central control system (CO) begins the power increase operation according to the new increase scheme.

2. Method according to Claim 1, **characterized in that** the parameters (PA) of the charging operation for the energy store of a respective vehicle (1) that are alterable by a user comprise one or more of the following parameters:
- a time window in which the energy store of the respective vehicle (1) needs to be charged;
- a power value with which the energy store of the respective vehicle (1) needs to be charged, and/or a maximum power value with which the energy store of the respective vehicle (1) is supposed to be charged at maximum;
- a departure time of the respective vehicle (1), a prescribed desired state of charge of the energy store of the respective vehicle (1) needing to be reached at the departure time;
- information about pre-conditioning that stipulates an amount of electric power needed by the respective vehicle (1) before a departure time is reached;
- information according to which the charging of the energy store of the respective vehicle (1) is supposed to be begun immediately when the vehicle is connected to the electricity grid and is supposed to be continued until a desired state of charge is reached;
- a desired state of charge that needs to be reached by a departure time of the respective vehicle or to which the respective vehicle charges at maximum without specification of a departure time.

3. Method according to either of the preceding claims, **characterized in that** in the event of the prescribed criterion being satisfied, it is further ensured that the power increase operation according to the increase scheme (ES) is no longer manipulated by the central control system (CO) such that the altered charging operation is altered again while the at least one prescribed vehicle (1) is participating in the power increase operation and while the parameter (s) (PA) of the altered charging operation is/are observed.

4. Method according to one of the preceding claims, **characterized in that** the electricity grid has a stationary energy storage system (SB) connected to it that is controlled by the central control system (CO) such that in the event of the increase in the power draw by the group of vehicles (1) by the amount of power (LB) according to the increase command (EB) not being able to be achieved exclusively by means of temporary increase in the charging power of the charging operation for the energy store of prescribed vehicles (1) in the group, the power draw by the stationary energy storage system (SB) from the electricity grid is increased or the power delivery by the stationary energy storage system (SB) to the electricity grid is decreased, so that the increase in the power draw by the group of vehicles (1) that is achieved by temporary increase in the charging power of the charging operation for the energy store of prescribed vehicles (1) in the group plus the amount of the increase in the power draw or of the decrease in the power delivery by the stationary energy storage system (SB) is consistent with the amount of power (LB) according to the increase command (EB).

5. Method according to one of the preceding claims, **characterized in that** a respective user interface by means of which a user of a respective vehicle (1) can alter at some of the parameters (PA) of the charging operation is part of a mobile device or is integrated in the respective vehicle (1).

6. Central control system for controlling the electrical charging of a group of vehicles (1) electrically connected to an electricity grid of an electricity grid operator, wherein the respective vehicles (1) draw power for the purpose of charging a vehicle-based energy store for driving the respective vehicle (1), one or more parameters (PA) to be observed for the charging operation for the energy store of the respective vehicles (1) being stipulated and a user of a respective vehicle (1) being able to use a respective user interface to alter at least some of these parameters (PA), wherein the central control system (CO) can communicate with the respective vehicles (1) and with a server (SE') of the electricity grid operator, wherein the central control system is configured such that
- the central control system (CO) responds to a received increase command (EB) by performing a power increase operation according to an increase scheme, wherein the increase command comes from the server (SE') of the electricity grid operator and stipulates an amount of power (LB) by which the power draw by the group of vehicles (1) from the electricity grid needs to be increased, and wherein the increase scheme (ES) is ascertained by the central control system (CO) on the basis of the amount of power (LB) in the increase command (EB) and specifies a temporary increase in the charging power of the charging operation for the energy store of one or more vehicles (1) in a number of prescribed vehicles in the group such that the increase in the power draw by the group of vehicles (1) by the amount of power (LB) according to the received increase command (EB) is achieved, the vehicles in the number of prescribed vehicles (1) having been selected to participate in the power increase operation and a divergence, caused by the central control system (CO), from the parameter(s) (PA) of the charging operation for the respective prescribed vehicles (1) being permitted for the number of prescribed vehicles (1) in the power increase operation according to the ascertained increase scheme (ES);
- in the event of the charging operation for the energy store of at least one prescribed vehicle (1) being altered by the user by means of a change to at least one of its parameters (P) after reception of the increase command (EB) and before or during the power increase operation, the central control system (CO) checks whether a prescribed criterion is satisfied, the prescribed criterion being satisfied if the observance of the parameter(s) (PA) of the altered charging operation does not decrease the amount of power (LB) according to the increase command (ES), wherein, during the check to determine whether the prescribed criterion is satisfied, the central control system (CO) takes into consideration a buffer that assumes a charging efficiency for the energy store of the at least one prescribed vehicle (1) that is decreased in comparison with an expected charging efficiency, in order to prevent the increase in the power draw by the group of vehicles (1) according to the increase scheme (ES) from being smaller than the amount of power (LB) according to the received increase command (EB) while the at least one prescribed vehicle (1) is participating in the power increase operation and while the parameter (s) (PA) of the altered charging operation is/are observed;
- in the event of the prescribed criterion being satisfied, the central control system (CO) begins or continues the power increase operation according to the increase scheme (ES) while the at least one prescribed vehicle (1) participates in the power increase operation and while the parameter (s) (PA) of the altered charging operation for the at least one prescribed vehicle (1) is/are observed, and otherwise the central control system (CO) ascertains a new increase scheme on the basis of the amount of power (LB) in the increase command (EB) without the participation of the at least one prescribed vehicle (1), and the central control system (CO) begins or continues the power increase operation according to the new increase scheme.

7. Control system according to Claim 6, **characterized in that** the control system is configured to perform a method according to one of Claims 2 to 5.

## Revendications

1. Procédé pour commander la charge électrique d'un groupe de véhicules (1), lesquels sont raccordés électriquement à un réseau électrique d'un opérateur de réseau électrique, les véhicules (1) respectifs soutirant du réseau électrique de l'électricité pour charger un accumulateur d'énergie côté véhicule servant à la propulsion du véhicule (1) respectif, un ou plusieurs paramètres (PA) à respecter de l'opération de charge de l'accumulateur d'énergie du véhicule (1) respectif étant fixés et un utilisateur d'un véhicule (1) respectif pouvant modifier au moins une partie de ces paramètres (PA) par le biais d'une interface utilisateur respective, un système de commande central (CO) pouvant communiquer avec les véhicules (1) respectifs du groupe ainsi qu'avec un serveur (SE') de l'opérateur de réseau électrique,
- le système de commande central (CO), en réponse à une instruction d'augmentation (EB), effectuant une opération d'augmentation de puissance conformément à un schéma d'augmentation (ES), l'instruction d'augmentation (EB) étant issue du serveur (SE') de l'opérateur de réseau électrique et fixant une valeur de puissance (LB) de laquelle doit être augmentée la puissance consommée du groupe de véhicules (1) depuis le réseau électrique, et le schéma d'augmentation (ES) étant déterminé par le système de commande central (CO) sur la base de la valeur de puissance (LB) de l'instruction d'augmentation (EB) et spécifiant une augmentation temporaire de la puissance de charge de l'opération de charge de l'accumulateur d'énergie d'un ou plusieurs véhicules (1) d'un certain nombre de véhicules (1) prédéfinis du groupe de telle sorte que l'augmentation de la puissance de charge du groupe de véhicules (1) de la valeur de puissance (LB) selon l'instruction d'augmentation (EB) est atteinte, les véhicules du certain nombre de véhicules (1) prédéfinis étant sélectionnés pour participer à l'opération d'augmentation de puissance et un écart provoqué par le système de commande central (CO) par rapport au ou aux paramètres (PA) de l'opération de charge des véhicules (1) respectivement prédéfinis étant autorisé pour le certain nombre de véhicules (1) prédéfinis dans l'opération d'augmentation de puissance conformément au schéma d'augmentation (ES) déterminé ;
- dans le cas où, après la réception de l'instruction d'augmentation (EB) et avant ou pendant l'opération d'augmentation de puissance, l'opération de charge de l'accumulateur d'énergie d'au moins un véhicule (1) prédéfini étant modifiée par l'utilisateur au moyen de la modification d'au moins l'un de ses paramètres (P), le système de commande central (CO) vérifiant alors si un critère prédéfini est satisfait, le critère prédéfini étant satisfait lorsque le respect du ou des paramètres (PA) de l'opération de charge modifiée ne diminue pas la valeur de puissance (LB) selon l'instruction d'augmentation (ES), le système de commande central (CO), lors de la vérification si un critère prédéfini est satisfait, tenant compte d'un tampon qui suppose une efficacité de charge de l'accumulateur d'énergie de l'au moins un véhicule (1) prédéfini, laquelle est réduite par rapport à une efficacité de charge attendue, afin d'éviter que l'augmentation de la puissance consommée du groupe de véhicules (1) conformément au schéma d'augmentation (ES), avec la participation de l'au moins un véhicule (1) prédéfini à l'opération d'augmentation de puissance et en respectant le ou les paramètres (PA) de l'opération de charge modifiée, soit inférieure à la valeur de puissance (LB) selon l'instruction d'augmentation (EB) reçue ;
- dans le cas où le critère prédéfini est satisfait, l'opération d'augmentation de puissance étant démarrée ou poursuivie par le système de commande central (CO) conformément au schéma d'augmentation (ES) avec la participation de l'au moins un véhicule (1) prédéfini à l'opération d'augmentation de puissance et en respectant le ou les paramètres (PA) de l'opération de charge modifiée et, sinon, un nouveau schéma d'augmentation étant déterminé par le système de commande central (CO) sur la base de la valeur de puissance (LB) de l'instruction d'augmentation (EB) sans la participation de l'au moins un véhicule (1) prédéfini, l'opération d'augmentation de puissance étant ensuite démarrée par le système de commande central (CO) conformément au nouveau schéma d'augmentation.

2. Procédé selon la revendication 1, **caractérisé en ce que** les paramètres (PA) modifiables par un utilisateur de l'opération de charge de l'accumulateur d'énergie d'un véhicule (1) respectif comprennent un ou plusieurs des paramètres suivants :
- un créneau temporel dans lequel l'accumulateur d'énergie du véhicule (1) respectif est à charger ;
- une valeur de puissance, avec laquelle l'accumulateur d'énergie du véhicule (1) respectif est à charger, et/ou une valeur de puissance maximale avec laquelle l'accumulateur d'énergie du véhicule (1) respectif doit être chargé au maximum ;
- une heure de départ du véhicule (1) respectif, un état de charge de consigne prédéfini de l'accumulateur d'énergie du véhicule (1) respectif devant être atteint à l'heure de départ ;
- une information à propos du préconditionnement, laquelle fixe une quantité d'énergie requise par le véhicule (1) respectif avant d'atteindre un moment de départ ;
- une information selon laquelle la charge de l'accumulateur d'énergie du véhicule (1) respectif doit commencer immédiatement lors du raccordement du véhicule au réseau électrique et être poursuivie jusqu'à atteindre un état de charge de consigne ;
- un état de charge de consigne, qui est à atteindre jusqu'à un moment de départ du véhicule respectif ou jusqu'auquel se charge au maximum le véhicule respectif en l'absence de spécification d'un moment de départ.

3. Procédé selon l'une des revendications précédentes, **caractérisé en ce que** dans le cas où le critère prédéfini est satisfait, il est en outre garanti que l'opération d'augmentation de puissance conformément au schéma d'augmentation (ES) avec la participation de l'au moins un véhicule (1) prédéfini à l'opération d'augmentation de puissance et en respectant le ou les paramètres (PA) de l'opération de charge modifiée n'est plus manipulée par le système de commande central (CO) de sorte que l'opération de charge modifiée soit encore une fois modifiée.

4. Procédé selon l'une des revendications précédentes, **caractérisé en ce qu'**un système d'accumulateur d'énergie stationnaire (SB) est raccordé au réseau électrique, lequel est commandé par le système de commande central (CO) de telle sorte que dans le cas où l'augmentation de la puissance consommée du groupe de véhicules (1) de la valeur de puissance (LB) selon l'instruction d'augmentation (EB) ne peut pas être atteinte exclusivement par l'augmentation temporaire de la puissance de charge de l'opération de charge de l'accumulateur d'énergie de véhicules (1) prédéfinis du groupe, la puissance consommée du système d'accumulateur d'énergie stationnaire (SB) depuis le réseau électrique est augmentée ou la puissance délivrée par le système d'accumulateur d'énergie stationnaire (SB) dans le réseau électrique est réduite, de sorte que l'augmentation de la puissance consommée du groupe de véhicules (1), qui est atteinte par l'augmentation temporaire de la puissance de charge de l'opération de charge de l'accumulateur d'énergie de véhicules (1) prédéfinis du groupe, plus la valeur de l'augmentation de la puissance consommée ou de la réduction de la puissance délivrée du système d'accumulateur d'énergie stationnaire (SB) corresponde à la valeur de puissance (LB) selon l'instruction d'augmentation (EB).

5. Procédé selon l'une des revendications précédentes, **caractérisé en ce qu'**une interface utilisateur respective, par le biais de laquelle un utilisateur d'un véhicule (1) respectif peut modifier au moins une partie des paramètres (PA) de l'opération de charge, fait partie d'un appareil mobile ou est intégrée dans le véhicule (1) respectif.

6. Système de commande centrale pour commander la charge électrique d'un groupe de véhicules (1), lesquels sont raccordés électriquement à un réseau électrique d'un opérateur de réseau électrique, les véhicules (1) respectifs soutirant de l'électricité pour charger un accumulateur d'énergie côté véhicule servant à la propulsion du véhicule (1) respectif, un ou plusieurs paramètres (PA) à respecter de l'opération de charge de l'accumulateur d'énergie du véhicule (1) respectif étant fixés et un utilisateur d'un véhicule (1) respectif pouvant modifier au moins une partie de ces paramètres (PA) par le biais d'une interface utilisateur respective, le système de commande central (CO) pouvant communiquer avec les véhicules (1) respectifs du groupe ainsi qu'avec un serveur (SE') de l'opérateur de réseau électrique, le système de commande central étant équipé de telle sorte que
- le système de commande central (CO), en réponse à une instruction d'augmentation (EB), effectue une opération d'augmentation de puissance conformément à un schéma d'augmentation, l'instruction d'augmentation étant issue du serveur (SE') de l'opérateur de réseau électrique et fixant une valeur de puissance (LB) de laquelle doit être augmentée la puissance consommée du groupe de véhicules (1) depuis le réseau électrique, et le schéma d'augmentation (ES) étant déterminé par le système de commande central (CO) sur la base de la valeur de puissance (LB) de l'instruction d'augmentation (EB) et spécifiant une augmentation temporaire de la puissance de charge de l'opération de charge de l'accumulateur d'énergie d'un ou plusieurs véhicules (1) d'un certain nombre de véhicules prédéfinis du groupe de telle sorte que l'augmentation de la puissance de charge du groupe de véhicules (1) de la valeur de puissance (LB) selon l'instruction d'augmentation (EB) est atteinte, les véhicules du certain nombre de véhicules (1) prédéfinis étant sélectionnés pour participer à l'opération d'augmentation de puissance et un écart provoqué par le système de commande central (CO) par rapport au ou aux paramètres (PA) de l'opération de charge des véhicules (1) respectivement prédéfinis étant autorisé pour le certain nombre de véhicules (1) prédéfinis dans l'opération d'augmentation de puissance conformément au schéma d'augmentation (ES) déterminé ;
- dans le cas où, après la réception de l'instruction d'augmentation (EB) et avant ou pendant l'opération d'augmentation de puissance, l'opération de charge de l'accumulateur d'énergie d'au moins un véhicule (1) prédéfini est modifiée par l'utilisateur au moyen de la modification d'au moins l'un de ses paramètres (P), le système de commande central (CO) vérifie alors si un critère prédéfini est satisfait, le critère prédéfini étant satisfait lorsque le respect du ou des paramètres (PA) de l'opération de charge modifiée ne diminue pas la valeur de puissance (LB) selon l'instruction d'augmentation (EB), le système de commande central (CO), lors de la vérification si le critère prédéfini est satisfait, tenant compte d'un tampon qui suppose une efficacité de charge de l'accumulateur d'énergie de l'au moins un véhicule (1) prédéfini, laquelle est réduite par rapport à une efficacité de charge attendue, afin d'éviter que l'augmentation de la puissance consommée du groupe de véhicules (1) conformément au schéma d'augmentation (ES), avec la participation de l'au moins un véhicule (1) prédéfini à l'opération d'augmentation de puissance et en respectant le ou les paramètres (PA) de l'opération de charge modifiée, soit inférieure à la valeur de puissance (LB) selon l'instruction d'augmentation (EB) reçue ;
- dans le cas où le critère prédéfini est satisfait, l'opération d'augmentation de puissance est démarrée ou poursuivie par le système de commande central (CO) conformément au schéma d'augmentation (ES) avec la participation de l'au moins un véhicule (1) prédéfini à l'opération d'augmentation de puissance et en respectant le ou les paramètres (PA) de l'opération de charge modifiée de l'au moins un véhicule (1) prédéfini et, sinon, un nouveau schéma d'augmentation est déterminé par le système de commande central (CO) sur la base de la valeur de puissance (LB) de l'instruction d'augmentation (EB) sans la participation de l'au moins un véhicule (1) prédéfini et l'opération d'augmentation de puissance est ensuite démarrée ou poursuivie par le système de commande central (CO) conformément au nouveau schéma d'augmentation.

7. Système de commande selon la revendication 6, **caractérisé en ce que** le système de commande est conçu pour mettre en œuvre un procédé selon l'une des revendications 2 à 5.
